Europäisches Patentamt

European Patent Office

Office européen des brevets

(11) Publication number : **0 473 402 A2**

# (12) EUROPEAN PATENT APPLICATION

(21) Application number : **91307859.8**

(22) Date of filing : **28.08.91**

(51) Int. Cl.⁵ : **H04M 1/02**

(30) Priority : **31.08.90 JP 229570/90**

(43) Date of publication of application :
**04.03.92 Bulletin 92/10**

(84) Designated Contracting States :
**DE FR GB NL SE**

(71) Applicant : **NEC CORPORATION**
**7-1, Shiba 5-chome Minato-ku**
**Tokyo 108-01 (JP)**

(72) Inventor : **Tamura, Yoshiharu**
**c/o NEC Corporation, 7-1, Shiba 5-chome**
**Minato-ku, Tokyo (JP)**
Inventor : **Kojima, Tatsuru**
**c/o NEC Corporation, 7-1, Shiba 5-chome**
**Minato-ku, Tokyo (JP)**

(74) Representative : **Orchard, Oliver John**
**JOHN ORCHARD & CO. Staple Inn Buildings**
**North High Holborn**
**London WC1V 7PZ (GB)**

(54) **Foldable portable telephone.**

㊼ A foldable portable telephone which allows the user to operate a power switch thereof and to see the ON/OFF state of the switch as well as a reception state even when put in the user's breast pocket in a folded position. A first and a second casing accomodating a transmitter and a receiver, respectively, are foldably connected together by a hinge mechanism. Indications or indicator indicative of the ON/OFF state of the power switch, an indicator for alerting the user to a call, and an opening for a sounder which produces an alert toner are positioned on or in close proximity to the ends of the casings which are remote from the hinge mechanism.

EP 0 473 402 A2

Fig. 4A

Fig. 4B

The present invention relates to a foldable portable telephone with improved portability.

A predominant type of portable telephone has a first and a second casing which are foldably connected together by a hinge mechanism in order to enhance portability. The two casings each accommodates particular electrical parts and elements constituting the telephone therein. This type of telephone may be put in, for example, the breast pocket of the user's shirt in a folded position while it is not in communication. When the telephone receives a call, the user unfolds it to hold a conversation thereon. For such a foldable telephone, a reference may be made to U. S. Patent 4, 897, 873 by way of example (which pertains to the structure of the hinge mechanism). It is desirable with a foldable portable telephone that the user can operate, among others, the power switch of the telephone and can easily see the ON/OFF indicator associated with the switch and the indicator for alerting the user to a call without pulling out the telephone from, for example, the breast pocket of the shirt. However, such a power switch and indicators have customarily been arranged arbitrarily on the two casings with no consideration given to the ease of operation and visibility. Therefore, when the telephone is put in, for example, the breast pocket of the user's shirt in the folded position, it is difficult for the user to operate the power switch or to see the ON/OFF state of the switch and the reception state indicated by the individual indicators.

A feature of an embodiment to be described is the provision of a foldable portable telephone which allows the user to operate a power switch and to see the ON/OFF state of the switch as well as the reception state even when the telephone is put in, for example, the breast pocket of the user's shirt in a folded position.

Such an embodiment provides a generally improved foldable portable telephone.

In a preferred embodiment of the invention a portable telephone comprises a first and a second casing accommodating respectively a receiver and a transmitter, a hinge mechanism foldably connecting the first and second casings to each other at one end of the casings, at least one of a power switch, indications or indicator indicative of the ON/OFF state of the power switch, an indicator for alerting the user of the telephone to the reception of a call, and an opening for a sounder which produces an alert tone is positioned on or in close proximity to the other end of either one of the first and second casings which is remote from the hinge mechanism when the telephone is folded.

The above and other objects, features and advantages of the present invention will become more apparent from the following detailed description taken with the accompanying drawings in which:

FIGS. 1A and 1B are perspective views showing a conventional foldable portable telephone in an unfolded and a folded position, respectively;

FIGS. 2A and 2B are views similar to FIGS. 1A and 1B, showing another conventional foldable portable telephone;

FIG. 3 shows the conventional telephone of FIGS. 1A and 1B which is put in the breast pocket of the user's shirt by way of example;

FIGS. 4A and 4B are perspective views showing a foldable portable telephone embodying the present invention in an unfolded position and a folded position, respectively;

FIGS. 5A and 5B are views similar to FIGS. 4A and 4B, showing an alternative embodiment of the present invention;

FIGS. 6A and 6B are views also similar to FIGS. 4A and 4B, showing another alternative embodiment of the present invention; and

FIG. 7 shows the telephone of FIGS. 6A and 6B which is put in the breast pocket of the user's shirt by way of example.

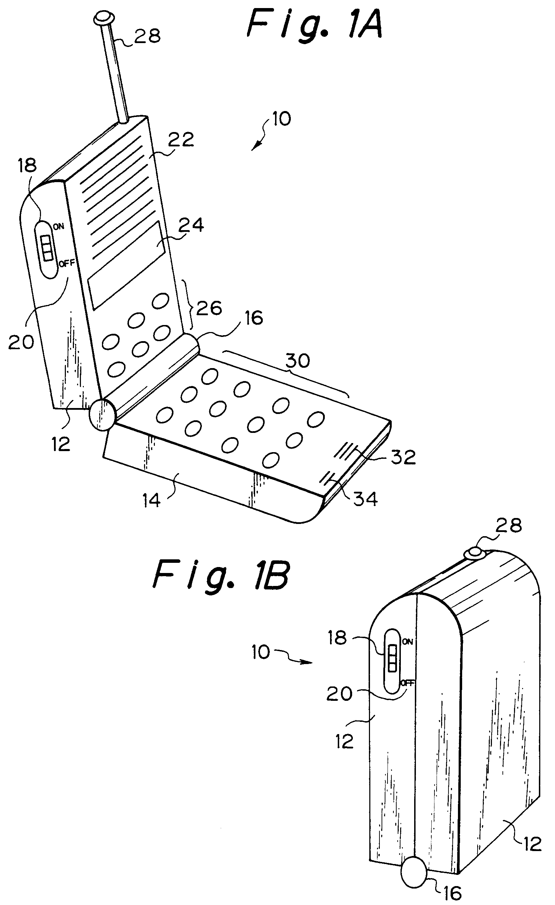

To better understand the present invention, a brief reference will be made to a prior art foldable portable telephone, shown in FIGS. 1A and 1B. As shown, the conventional portable telephone, generally 10, is generally made up of a casing 12 mainly accommodating a receiver, a casing 14 mainly accommodating a transmitter, and a hinge mechanism 16 for foldably connecting the two housings 12 and 13 together. A power switch 18 is provided on one side of the casing 12 together with indications 20 indicative of the ON/OFF position of the power switch 18. Provided on the surface of the casing 12 that faces the other casing 14 when the telephone is folded, as shown in FIG. 1B, are an opening 22 for an earpiece receiver, a display 24 for displaying a reception state, and keys 26. An antenna 28 is provided on the end of the casing 12 remote from the hinge mechanism 16. The other casing 14 has keys 30, an opening 32 assigned to a mouthpiece microphone, and an opening 34 for a sounder which produces an alert tone on the surface thereof that faces the casing 12. On receiving a call, the telephone causes the display 24 to turn on or flash while causing the sounder to produce an alert tone through the opening 34. Such a conventional portable telephone allows the user to operate the power switch 18 and keys 26 and 30 with ease after unfolding the casings 12 and 14. In addition, it is easy for the user to see the ON/OFF state of the power switch 18 as well as the reception of a call.

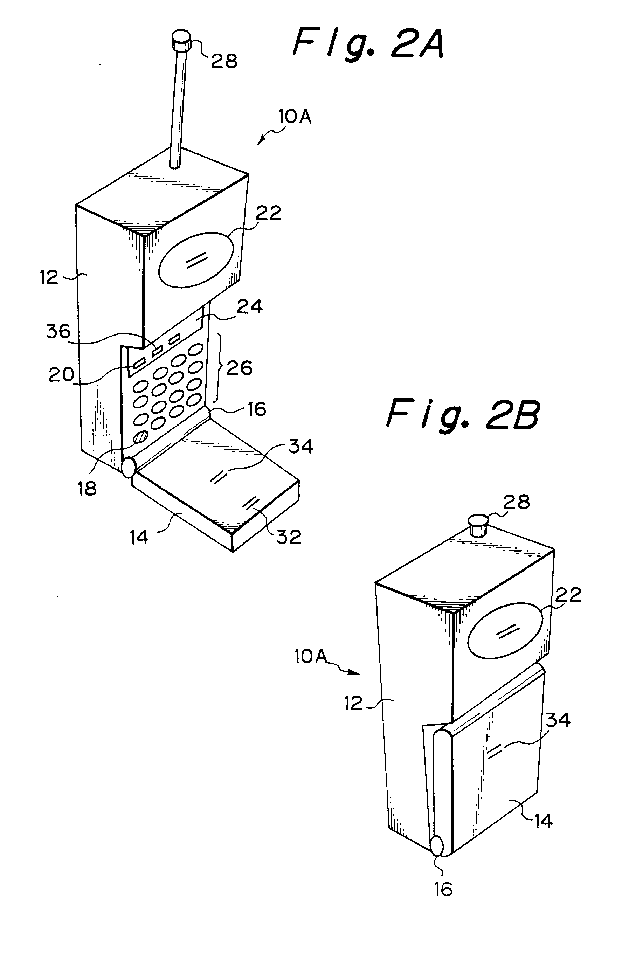

FIGS. 2A and 2B show another conventional foldable portable telephone. In the figures, the same or similar components parts and elements are designated by the same reference numerals, and redundant description will be avoided for simplicity. This conventional telephone, generally 10A, has the power switch 18 and the indicator 20 indicative of the ON/OFF state of the switch 18 on the surface of the casing 12 that faces the casing 14. The indicator 20 is provided on the display 24. An indicator 36 also provided on the display 24 alerts the user to the reception of a call. On receiving a call, the telephone 10A produces an alert tone through the opening 34, so that the user may hear it even when the casings 12 and 14 are folded.

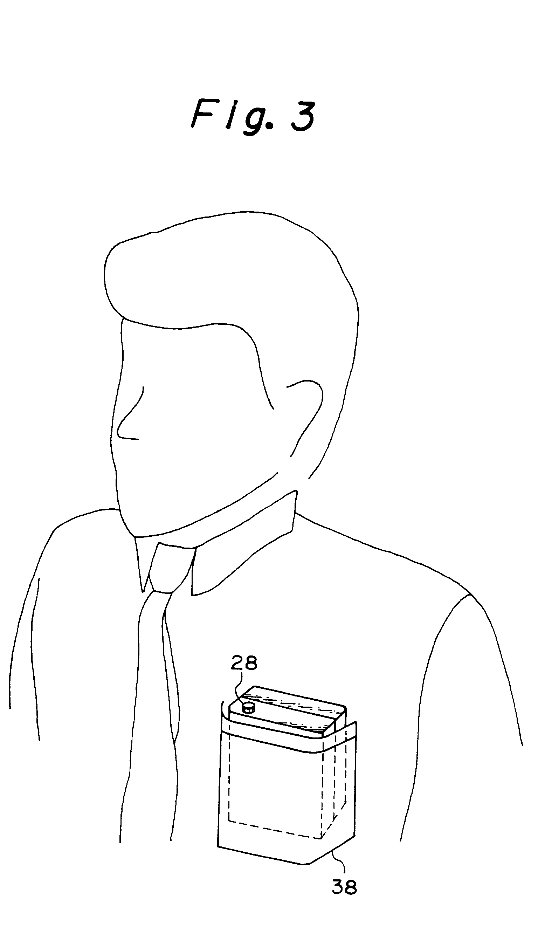

The portable telephone 10, for example, may be, and often is, put in the breast pocket 38 of the user's shirt in the folded position thereof, as shown in FIG. 3. The telephone 10 as well as the telephone 10A is so constructed as to exhibit a certain degree of reception sensitivity even when held in the specific condition shown in FIG. 3. It is desirable, therefore, that in such a condition the user can operate the power switch 18 and see the ON/OFF state of the switch 18 as well as the reception of a call.

However, the power switch 18 provided on the side of the telephone 10 or 10A is difficult to operate and, in addition, the ON/OFF state of the switch 18 is not visible unless the telephone 10 or 10A is bodily pulled out of the pocket since the indications or indicator 20 is positioned on the same surface as the switch 18. Moreover, the power switch 18 of the telephone 10A shown in FIGS. 2A and 2B cannot be operated or seen at all when the telephone 10A is put in the pocket 38. While the telephones 10 and 10A each alerts the user to a call by sound when put in the pocket 38, it is likely that the sound pressure is attenuated. The reception of a call may be indicated by the turn-on or flashing of a lamp in place of an alert tone in order to free persons around the user from annoyance during, for example, a conference, as has also been customary in the art. However, neither the telephone 10 nor the telephone 10A is not provided with such an implementation.

As stated above, while the conventional telephones 10 and 10A are elaborated to enhance portability, no consideration is given to the easy operation of a power switch or the visibility of the ON/OFF state of the switch and the reception state.

Preferred embodiments of the foldable portable telephone in accordance with the present invention will be described which are free from the drawbacks particular to the prior art as discussed above. In the figures, the same or similar parts and elements are designated by the same reference numerals, and redundant description will be avoided for simplicity.

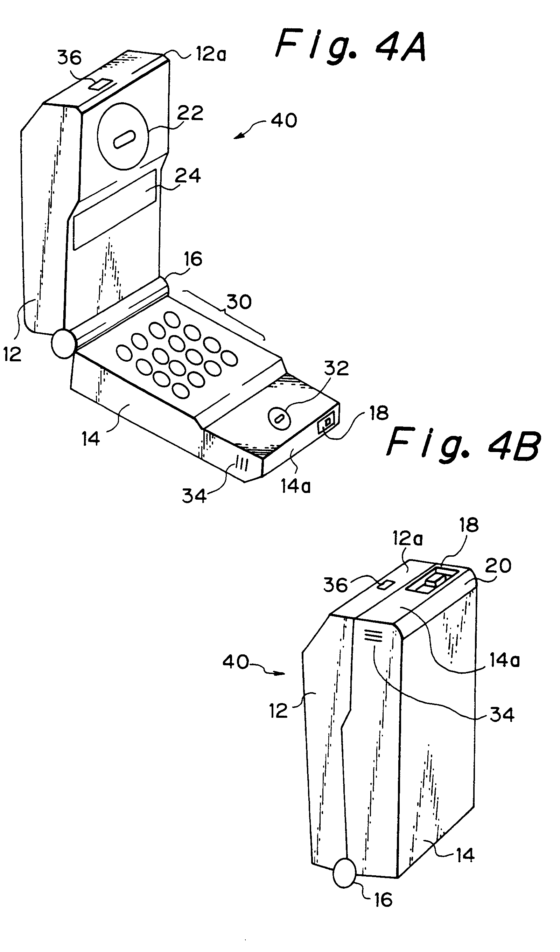

FIGS. 4A and 4B show a foldable portable telephone embodying the present invention in an unfolded position and a folded position, respectively. As shown, the telephone, generally 40, has a power switch 18, an indicator 20 indicative of the ON/OFF state of the switch 18, and an opening 34 associated with a sounder. The power switch 18, indicator 20 and opening 34 are positioned on one end 14a of a casing 14 which is remote from a hinge mechanism 16. An indicator 36 for alerting the user to a call is positioned on one end 12a of the other casing 12 which is also remote from the hinge mechanism 16.

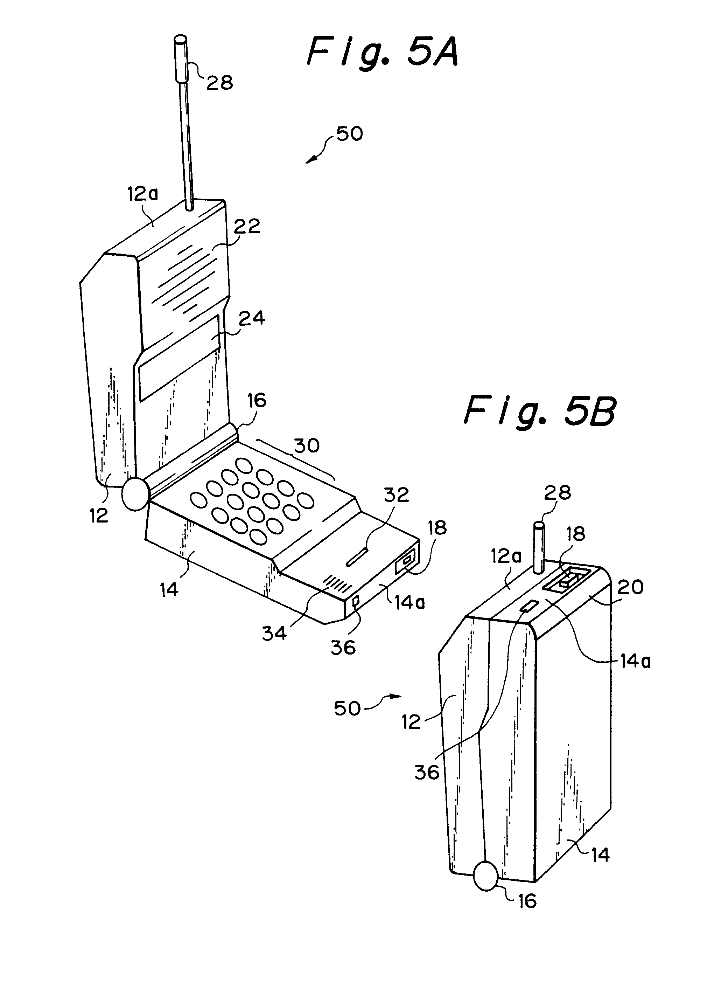

FIGS. 5A and 5B show an alternative embodiment of the present invention. In this embodiment, a telephone 50 has an antenna 28 provided on one end 12a of the casing 12 which is remote from the hinge mechanism 16. A power switch 18, indications indicative of the ON/OFF state of the switch 18, and an indicator for alerting the user to a call are positioned on one end 14a of the other casing 14 which is also remote from the hinge mechanism 16. Further, an opening 34 assigned to a sounder is formed through the wall of the casing 14 that faces the casing 12 when the telephone 50 is folded. The opening 34 is located in close proximity to the end 14a of the casing 14.

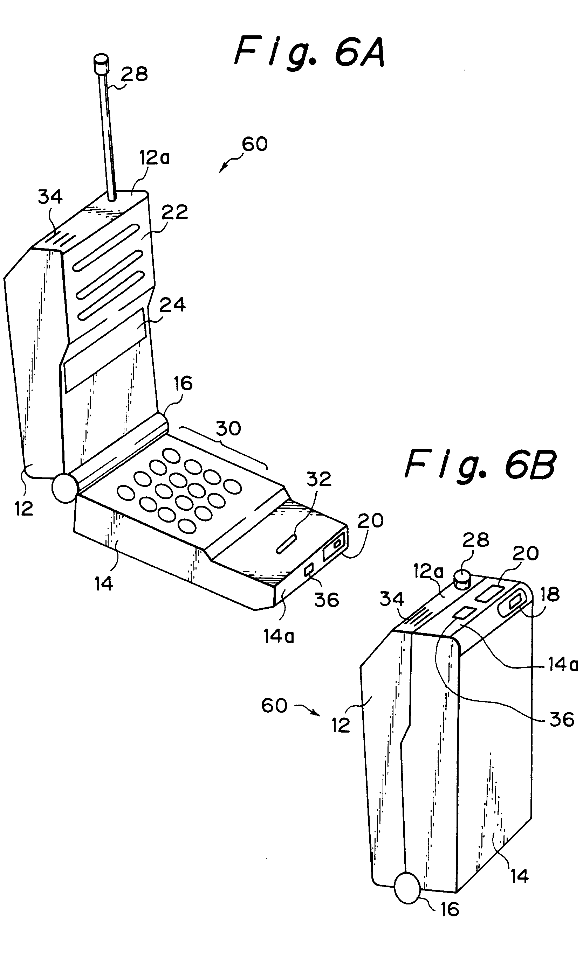

Another alternative embodiment of the present invention is shown in FIGS. 6A and 6B. As shown, the telephone, generally 60, has the antenna 28 and the opening 34 associated with a sounder on the end 12a of the casing 12 which is remote from the hinge mechanism 16. The power switch 18, ON/OFF indicator 20 associated therewith, and call indicator 36 are provided on the end 14a of casing 14 which is remote from the casing 14.

In any of the embodiments shown and described, the power switch 18, indications or indicator 20, indicator 36 and opening 34 may, of course, be distributed to the ends 12a and 14a of the casings 12 and 14 in any suitable manner.

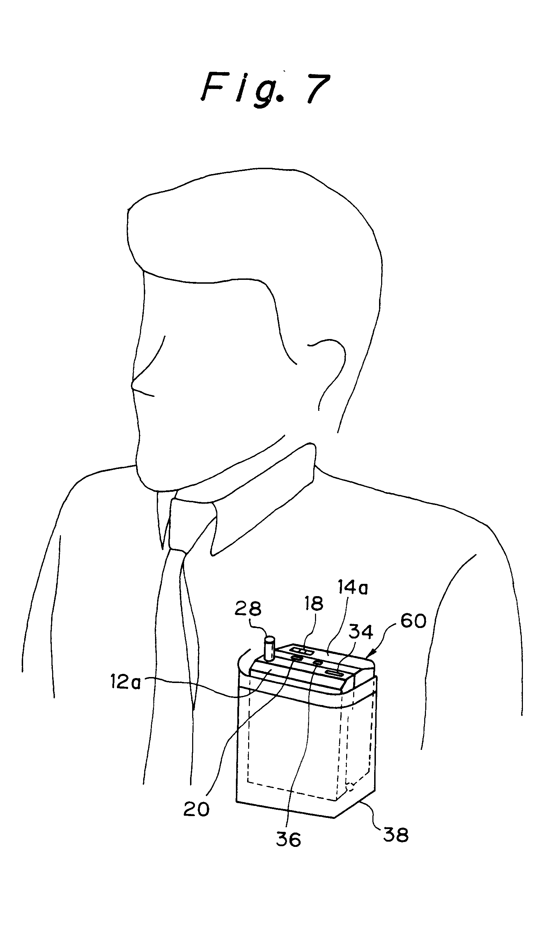

In summary, the telephone 40, 50 or 60 has the power switch 18, ON/OFF indications or indicator 20, call indicator 36 and opening 34 on or in close proximity to the ends 12a and 14a of the casings 12 and 14 which are remote from the hinge mechanism 16. Hence, as shown in FIG. 7, even when the telephone 60, for example, is put in the breast pocket 38 of the user's shirt with the hinge mechanism 16 facing downward, the user can operate the power switch 18 and see the ON/OFF state of the switch 18 as well as the reception state without pulling it out of the pocket 38. In addition, the user can surely hear an alert tone which will be produced from the opening 34 in the event of the reception of a call.

Various modifications will become possible for those skilled in the art after receiving the teachings of the present disclosure without departing from the scope thereof, as defined in the accompanying claims.

## Claims

1. In a foldable portable telephone including a first and a second casing accomodating respectively a receiver and a transmitter, hinge means foldably connecting said first and second casings to each other at one end of said casings, at least one of a power switch, first indicating means indicative of the ON/OFF state of said power switch, second indicating means for alerting the user of said telephone to the receptionof a call, and an opening for a sounder which produces an alert tone is positioned on or in close proximity to the other end or either one of said first and second casings which is remote from said hinge means when said telephone is folded.

2. A telephone as claimed in claim 1, wherein said second indicating means is positioned on the other end of said first casing which is remote from said hinge means, said power switch, said first indicating means and said openin being positioned on the other end of said second casing.

3. A telephone as claimed in claim 1, wherein an antenna is positioned on the end of said first casing which is remote from said hinge means, said power switch, said first and second indicating means and said opening being positioned on or in close proximity to said second casing.

4. A telephone as claimed in claim 1, wherein an antenna and said opening are positioned on the other end of said first casing which is remote from said hinge means, said power switch and said first and second indicating means being positioned on or in close proximity to the other end of said second second which is remote from said hinge means.

5. A telephone including first casing means for accommodating first part of circuitry of said telephone, second casing means for accommodating second part of said circuitry, hinge means for foldably connecting said first and second casing means to each other at one ends thereof, a power switch, and indicator means for indicating a state of said telephone, wherein one of said power switch and indicator means is disposed substantially on the other end of either one of said first and second casing means which is remote from said hinge means.

6. A telephone as claimed in claim 5, wherein said indicator means includes either an indicator for indicating the state of said power switch or an indicator for indicating the reception of a call directed to said telephone.

7. A method of positioning a power switch and an indicator of a telephone having first and second circuitry, including the steps of accommodating said first and second circuitry into first and second casings, respectively; foldably connecting said first and second casings to each other at one ends thereof; and positioning one of said power switch and indicator substantially on the other end of either one of said first and second casings.

# Fig. 1A

# Fig. 1B

# Fig. 2A

# Fig. 2B

# Fig. 3

28

38

Fig. 4A

Fig. 4B

## Fig. 5A

## Fig. 5B

Fig. 6A

Fig. 6B

# Fig. 7